(19) Europäisches Patentamt
European Patent Office
Office européen des brevets

(11) EP 0 775 732 B1

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(51) Int Cl.[7]: **C09B 62/513**, C09B 62/09, C09B 62/002

(21) Anmeldenummer: **96810743.3**

(22) Anmeldetag: **07.11.1996**

(54) **Faserreaktive Farbstoffe, ihre Herstellung und Verwendung**

Fiber-reactive dyestuffs, their preparation and use

Colorants réactifs sur la fibre, leur préparation et leur utilisation

(84) Benannte Vertragsstaaten:
**BE CH DE ES FR GB IT LI PT**

(30) Priorität: **16.11.1995 CH 325495**

(43) Veröffentlichungstag der Anmeldung:
**28.05.1997 Patentblatt 1997/22**

(73) Patentinhaber: **Ciba Specialty Chemicals Holding Inc.**
**4057 Basel (CH)**

(72) Erfinder: **Reichert, Hans**
**79618 Rheinfelden (DE)**

(56) Entgegenhaltungen:
**EP-A- 0 478 503**
**EP-A- 0 511 523**
**EP-A- 0 625 549**
**GB-A- 2 008 144**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 775 732 B1

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind daher Verbindungen der Formel

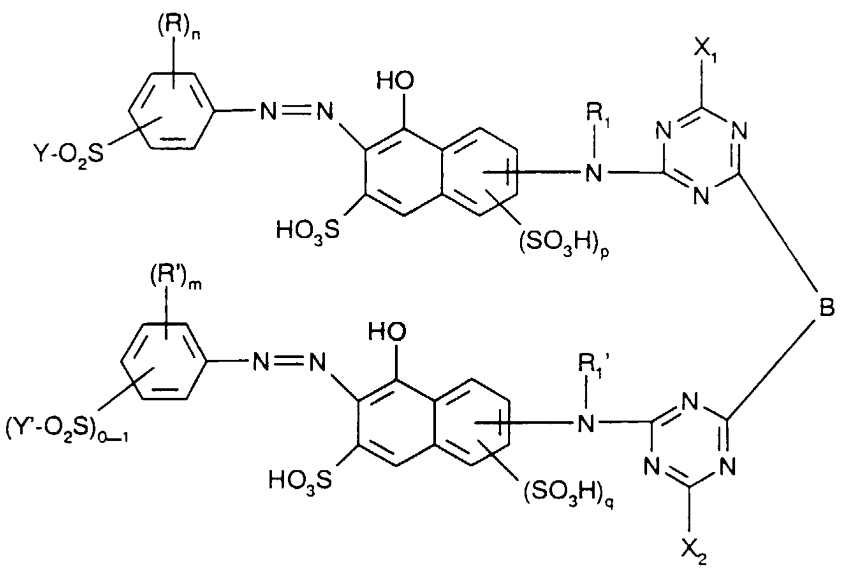

(1)

worin B ein Brückenglied der Formel

$$-NR_2-(alk)-NR_3- \quad (2a)$$

oder

$$-NR_2-(alk'-O)_r-(alk')-NR_2'- \quad (2b)$$

oder

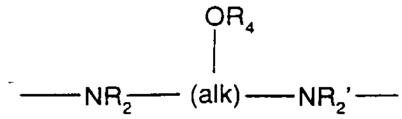

(2c)

ist,

$(R)_n$ für n gleiche oder verschiedene Reste aus der Gruppe $C_1$-$C_4$-Alkyl, $C_1$-$C_4$-Alkoxy, Halogen und Sulfo und $(R')_m$ für m gleiche oder verschiedene Reste aus der Gruppe $C_1$-$C_4$-Alkyl, $C_1$-$C_4$-Alkoxy, Halogen und Sulfo stehen,
n und m unabhängig voneinander je die Zahl 0, 1 oder 2 sind,
$R_1$, $R_1'$, $R_2$ und $R_2'$ unabhängig voneinander je Wasserstoff oder gegebenenfalls substituiertes $C_1$-$C_4$-Alkyl bedeuten,
$R_3$ durch Hydroxy substituiertes $C_1$-$C_6$-Alkyl ist,
$R_4$ Wasserstoff oder $C_1$-$C_4$-Alkyl bedeutet,
(alk) geradkettiges oder verzweigtes $C_2$-$C_{12}$-Alkylen und (alk') geradkettiges oder verzweigtes $C_2$-$C_4$-Alkylen sind,
$X_1$ und $X_2$ unabhängig voneinander je für Halogen, 3-Carboxypyridin-1-yl oder 3-Carbamoylpyridin-1-yl stehen,
Y und Y' unabhängig voneinander je Vinyl oder einen Rest -$CH_2$-$CH_2$-U bedeuten und U eine Abgangsgruppe ist,
und p und q unabhängig voneinander je die Zahl 0 oder 1 und r die Zahl 1, 2 oder 3 bedeuten.

Die erfindungsgemässen Farbstoffe der Formel (1) unterscheiden sich hinsichtlich des Brückenglieds B von den in der EP-A-625,549, der EP-A-511,523 und der GB-A-2,008,144 offenbarten Farbstoffen.

In der EP-A-478,503 werden Farbstoffe offenbart, die sich von den erfindungsgemässen Farbstoffen der Formel (1) einerseits hinsichtlich des Brückenglieds B und andererseits hinsichtlich der fehlenden faserreaktiven Gruppe an der Diazokomponente unterscheiden.

Die Verbindungen der Formel (1) enthalten mindestens zwei, vorzugsweise 2 bis 8 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di-oder Triethanolamins oder Na/Li- oder Na/Li/$NH_4$-Mischsalze genannt.

Beispiele für geeignete Reste (alk) sind geradkettiges oder verzweigtes Ethylen, Propylen, Butylen, Pentylen, Hexylen, Heptylen, Octylen, Nonylen, Decylen, Undecylen oder Dodecylen. Der bivalente Rest (alk) steht bevorzugt für geradkettiges oder verzweigtes $C_2$-$C_6$-Alkylen, besonders bevorzugt für geradkettiges oder verzweigtes $C_2$-$C_4$-Alkylen und insbesondere bevorzugt für 1,2-Ethylen oder 1,3-Propylen.

Der bivalente Rest (alk') bedeutet bevorzugt 1,2-Propylen oder insbesondere 1,2-Ethylen.

r bedeutet bevorzugt die Zahl 2 oder 3 und besonders bevorzugt die Zahl 2. p und q bedeuten bevorzugt je die Zahl 1.

Bedeuten $R_1$, $R_1'$, $R_2$ oder $R_2'$ gegebenenfalls substituiertes $C_1$-$C_4$-Alkyl, kann es sich z.B. um unsubstituiertes oder z.B. durch Hydroxy, Sulfo, Sulfato, Carboxy, Cyano, Halogen, $C_1$-$C_4$-Alkoxycarbonyl oder Carbamoyl substituiertes Methyl, Ethyl, n- oder iso-Propyl oder n-, sec.-, tert.- oder iso-Butyl handeln.

$R_1$, $R_1'$, $R_2$ und $R_2'$ stehen unabhängig voneinander je bevorzugt für Wasserstoff oder $C_1$-$C_4$-Alkyl, besonders bevorzugt für Wasserstoff, Methyl oder Ethyl und insbesondere bevorzugt für Wasserstoff.

$R_3$ bedeutet z.B. Methyl, Ethyl, n- oder iso-Propyl, n-, iso-, sec.- oder tert.-Butyl oder geradkettiges oder verzweigtes Pentyl oder Hexyl, welches 1 bis 3 Hydroxygruppen, vorzugsweise 1 Hydroxygruppe, trägt. $R_3$ bedeutet bevorzugt einen monohydroxy-substituierten $C_1$-$C_4$-Alkylrest und insbesondere bevorzugt einen monohydroxy-substituierten Ethyl- oder Propylrest. $R_3$ steht insbesondere bevorzugt für den β-Hydroxyethylrest.

$R_4$ bedeutet bevorzugt Wasserstoff, Methyl oder Ethyl und besonders bevorzugt Wasserstoff.

Bevorzugt als Brückenglied B sind solche Reste der zuvor angegebenen Formeln (2a), (2b) und (2c), worin (alk) geradkettiges oder verzweigtes $C_2$-$C_6$-Alkylen, (alk') 1,2-Ethylen, r die Zahl 2 oder 3, $R_2$ und $R_2'$ je Wasserstoff, $R_3$ monohydroxy-substituiertes $C_1$-$C_4$-Alkyl und $R_4$ Wasserstoff bedeuten.

B steht besonders bevorzugt für einen Rest der Formel (2a), worin für $R_2$, $R_3$ und (alk) jeweils die zuvor genannten Bedeutungen und Bevorzugungen gelten. B bedeutet insbesondere bevorzugt den Rest -NH-$CH_2$-$CH_2$-N($CH_2CH_2$-OH)-.

$X_1$ und $X_2$ bedeuten unabhängig voneinander je bevorzugt Fluor oder Chlor. $X_1$ und $X_2$ können verschieden oder vorzugsweise gleich sein. $X_1$ und $X_2$ bedeuten besonders bevorzugt jeweils Chlor.

R und R' bedeuten unabhängig voneinander je bevorzugt Methyl, Methoxy, Chlor oder Sulfo und besonders bevorzugt Sulfo, Methyl oder Methoxy.

n und m bedeuten unabhängig voneinander je bevorzugt die Zahl 0 oder 1 und besonders bevorzugt je die

Zahl 0.

$(R)_n$ und $(R')_m$ stehen unabhängig voneinander je bevorzugt für 0, 1 oder 2 gleiche oder verschiedene Reste aus der Gruppe Methyl, Methoxy und Sulfo und besonders bevorzugt für 0 oder 1 Rest aus der Gruppe Methyl, Methoxy und Sulfo.

Die Reste $(R)_n$ und $(R')_m$ können verschieden oder gleich sein und sind bevorzugt gleich.

Bedeuten Y oder Y' einen Rest $-CH_2-CH_2-U$, so kann es sich bei der Abgangsgruppe U z.B. um -Cl, -Br, -F, $-OSO_3H$, $-SSO_3H$, $-OCO-CH_3$, $OPO_3H_2$, $-OCO-C_6H_5$, $OSO_2-C_1-C_4$-Alkyl oder $-OSO_2-N(C_1-C_4\text{-Alkyl})_2$ handeln. Bevorzugt ist U eine Gruppe der Formel -Cl, $-OSO_3H$, $-SSO_3H$, $-OCO-CH_3$, $-OCO-C_6H_5$ oder $-OPO_3H_2$, insbesondere -Cl oder $-OSO_3H$ und besonders bevorzugt $-OSO_3H$.

Y und Y' bedeuten unabhängig voneinander je bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl. Die Reste Y und Y' können verschieden oder gleich sein und sind bevorzugt gleich.

Vorzugsweise enthalten die Farbstoffe der Formel (1) einen Rest der Formel $-SO_2-Y'$.

Eine bevorzugte Gruppe von erfindungsgemässen Verbindungen entspricht der Formel

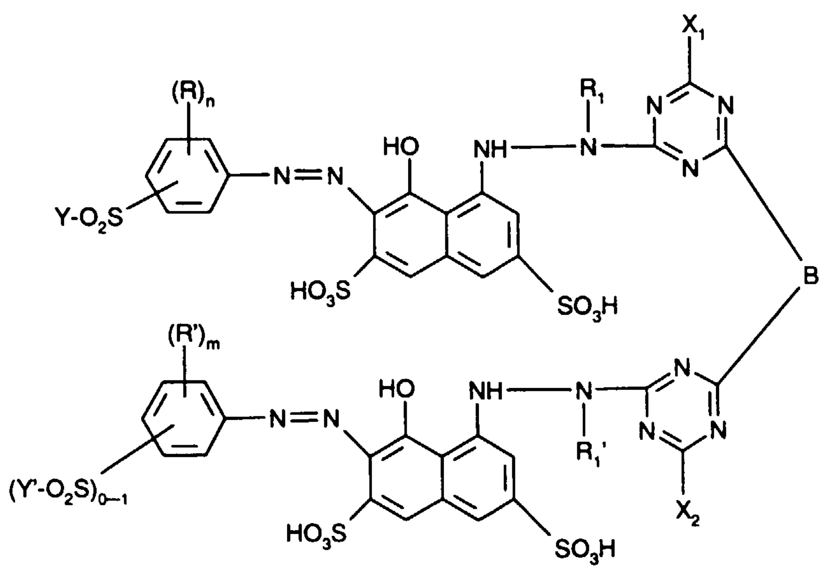

(1a),

insbesondere der Formel

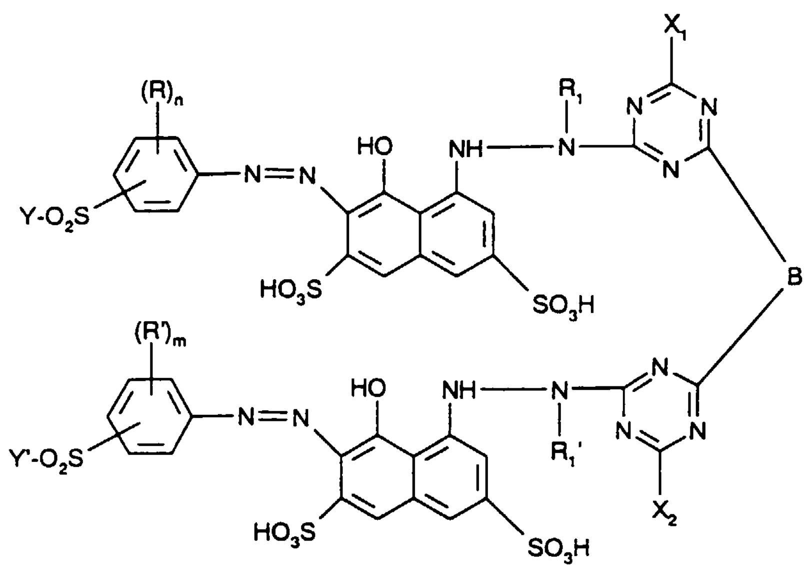

(1b),

wobei in den Formeln (1a) und (1b) für B, $X_1$, $X_2$, Y, $(R)_n$ und $(R')_m$ jeweils die zuvor angegebenen Bedeutungen und

Bevorzugungen gelten.

Eine besonders bevorzugte Gruppe von erfindungsgemässen Verbindungen entspricht der Formel (1a), insbesondere der Formel (1b), worin $X_1$ und $X_2$ je Chlor bedeuten, $R_1$ und $R_1$' je für Wasserstoff stehen, $(R)_n$ und $(R')_m$ gleich sind und je für 0, 1 oder 2 gleiche oder verschiedene Reste aus der Gruppe Methyl, Methoxy und Sulfo stehen, Y und Y' gleich sind und je für β-Sulfatoethyl oder Vinyl stehen und B ein Brückenglied der Formel

$$- NR_2 - (alk) - NR_3 - \qquad (2a)$$

ist, worin $R_2$ Wasserstoff, $R_3$ monohydroxy-substituiertes $C_1$-$C_4$-Alkyl und (alk) geradkettiges oder verzweigtes $C_2$-$C_4$-Alkylen bedeuten.

Gegenstand der vorliegenden Erfindung ist ferner ein Verfahren zur Herstellung der Verbindungen der Formel (1) bzw. (1a), welches dadurch gekennzeichnet ist, dass man je in etwa 1 Moläquivalent einer Verbindung der Formel

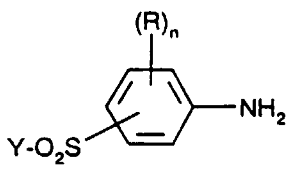
(3a),

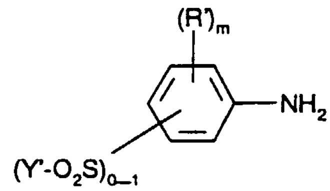
(3b),

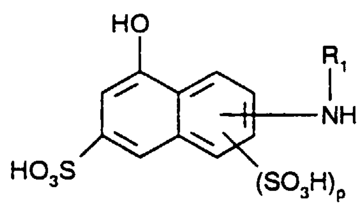
(4a),

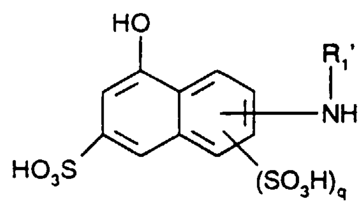
(4b)

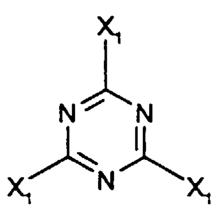
(5a),

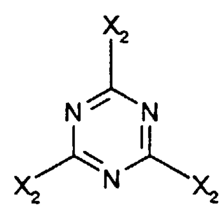
(5b)

und

$$H - B - H \qquad (6),$$

in beliebiger Reihenfolge miteinander umsetzt, wobei B, $(R)_n$, $(R')_m$ $R_1$, $R_1$', $X_1$, $X_2$, Y, p und q jeweils die zuvor angegebene Bedeutung haben.

Die Diazotierung der Verbindungen der Formeln (3a) und (3b) und ihre Kupplung mit den Verbindungen der Formeln (4a) und (4b) bzw. einem Umsetzungsprodukt der Verbindungen der Formeln (4a) und (5a) bzw. (4b) und (5b) und gegebenenfalls (6) erfolgt in üblicher Weise, z.B. indem man die Verbindung der Formel (3a) bzw. (3b) in mineralsaurer Lösung, z.B. salzsaurer Lösung mit einem Nitrit, z.B. Natriumnitrit, bei niedriger Temperatur, z.B. bei 0 bis 5°C, diazotiert und anschliessend bei einem neutralen bis leicht sauren pH-Wert, z.B. bei pH 3 bis 7 und bevorzugt 5 bis 6,5, und niedrigen Temperaturen, z.B. 0 bis 30°C, mit der entsprechenden Kupplungskomponente kuppelt.

Die Kondensationsreaktionen zwischen den Verbindungen der Formeln (4a), (4b), (5a), (5b) und (6) erfolgen im allgemeinen analog zu bekannten Verfahren, in der Regel in wässriger Lösung bei Temperaturen von z.B. 0 bis 50°C und einem pH-Wert von z.B. 4 bis 10.

Das Verfahren zur Herstellung der bevorzugten symmetrischen Verbindungen der Formel (1) ist dadurch gekennzeichnet, dass man in etwa 1 Moläquivalent Verbindung der Formel (4a) zunächst mit in etwa 1 Moläquivalent Verbindung der Formel (5a) kondensiert, das erhaltene Produkt mit in etwa 1 Moläquivalent zuvor diazotierter Verbindung der Formel (3a) kuppelt und die resultierende Monoazotriazinylverbindung mit in etwa 0,5 Moläquivalenten einer Verbindung der Formel (6) kondensiert.

Die wichtigsten Verfahrensvarianten sind in den Beispielen beschrieben.

Die Verbindungen der Formeln (3a), (3b), (4a), (4b), (5a), (5b) und (6) sind bekannt oder können in Analogie zu bekannten Verbindungen hergestellt werden.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasem und Polyurethane, und insbesondere cellulosehaltige Fasermaterialien aller Art genannt. Solche cellulosehaltige Fasermaterialien sind beispielsweise die natürlichen Cellulosefasem, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: Herstellung der Verbindung der Formel

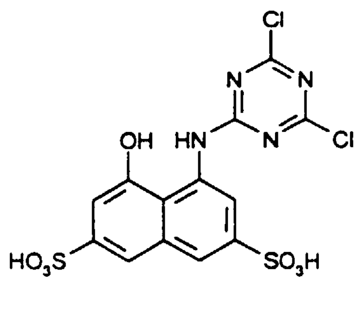

19 Teile Cyanurchlorid und 5 Teile Dinatriumhydrogenphosphat werden in 50 Teilen Eis/Wasser unter Zusatz eines

Netzmittels bei einer Temperatur von 0°C 15 Minuten lang kräftig durchmischt. Dazu tropft man eine neutrale Lösung von 32 Teilen 1-Amino-8-naphthol-3,6-disulfosäure in 300 Teilen Wasser so, dass die Reaktionsmischung den pH-Wert von 3 nicht überschreitet. Nach beendeter Zugabe wird mit Natriumhydroxid-Lösung noch zwei Stunden bei pH 3 und 0°C gehalten.

Beispiel 2: Diazotierung von 2-(4-Aminophenylsulfonyl)-ethyl-hydrogensulfat.

28 Teile 2-(4-Aminophenylsulfonyl)-ethyl-hydrogensulfat werden in 300 Teilen Wasser suspendiert und mit gesättigter Natriumcarbonat-Lösung bei pH 6 gelöst, auf 0°C abgekühlt, mit 7 Teilen Natriumnitrit, 50 Teilen Eis und 30 Teilen konz. Salzsäure versetzt und zwei Stunden diazotiert. Danach wird überschüssiges Nitrit mit wenig Sulfaminsäure vernichtet.

Beispiel 3: Herstellung der Verbindung der Formel

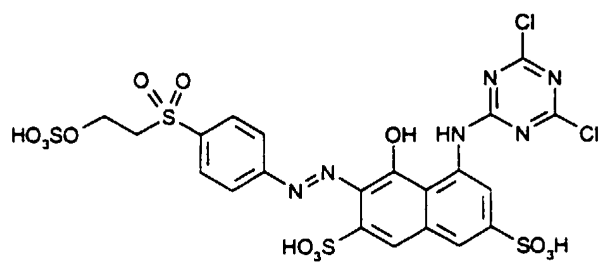

(7)

Die gemäss Beispiel 2 hergestellte Reaktionsmischung wird in ca. 30 Minuten zu der gemäss Beispiel 1 hergestellten Reaktionsmischung gegeben, der pH-Wert innerhalb von drei Stunden mit gesättigter Natriumacetat-Lösung auf 4,5 angehoben und die Temperatur zwischen 0 und 5°C gehalten.

Beispiel 4: Diazotierung von 2-(4-Amino-3,6-dimethoxyphenylsulfonyl)-ethyl-hydrogensulfat. Man verfährt wie im Beispiel 2 beschrieben und verwendet anstelle der 28 Teile 2-(4-Aminophenylsulfonyl)-ethyl-hydrogensulfat eine äquivalente Menge 2-(4-Amino-3,6-dimethoxyphenylsulfonyl)-ethyl-hydrogensulfat.

Beispiel 5: Herstellung der Verbindung der Formel

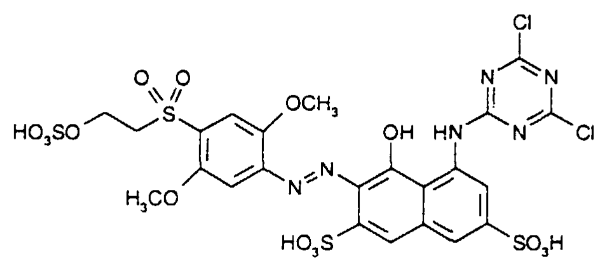

(8)

Die gemäss Beispiel 4 hergestellte Reaktionsmischung wird in ca. 30 Minuten zu der gemäss Beispiel 1 hergestellten Reaktionsmischung gegeben, der pH-Wert innerhalb von drei Stunden mit gesättigter Natriumacetat-Lösung auf 4,5 angehoben und die Temperatur zwischen 0 und 5°C gehalten.

Beispiel 6: Zu der gemäss Beispiel 3 erhaltenen die Verbindung der Formel (7) enthaltenden Reaktionsmischung werden 5 Teile *N*-(2-Hydroxyethyl)-ethylendiamin in 50 Teilen Wasser so gegeben, dass der pH-Wert nicht über 8,5 steigt. Nach beendeter Zugabe erwärmt man auf eine Temperatur von 25 bis 30°C und hält den pH-Wert mit Natriumhydroxid-Lösung für zwei Stunden bei 8,5. Die anschliessende Neutralisation mit verdünnter Salzsäure, eine Umkehrosmose und Eindampfen im Vakuum führen zur Verbindung der Formel

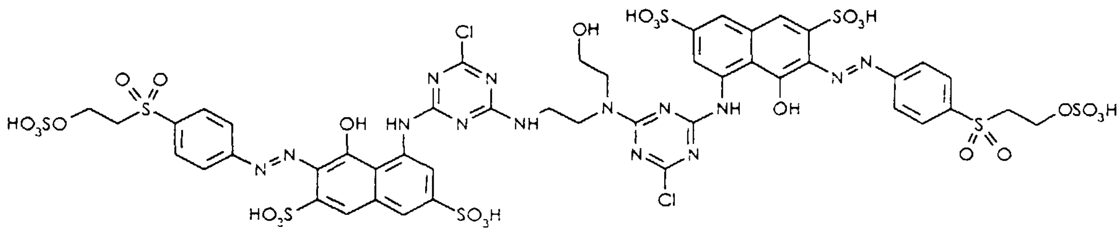

,

welche Baumwolle in einer roten Nuance mit guten Allgemeinechtheiten färbt.

Beispiel 6a: Zu der gemäss Beispiel 3 erhaltenen die Verbindung der Formel (7) enthaltenden Reaktionsmischung werden 5 Teile *N*-(2-Hydroxyethyl)-ethylendiamin in 50 Teilen Wasser so gegeben, dass der pH-Wert nicht über 8,5 steigt. Nach beendeter Zugabe erwärmt man auf eine Temperatur von 25 bis 30°C, hält den pH-Wert mit Natriumhydroxid-Lösung für zwei Stunden bei 8,5 und für 20 Minuten bei 11. Die anschliessende Neutralisation, eine Umkehrosmose und Eindampfen im Vakuum führen zur Verbindung der Formel

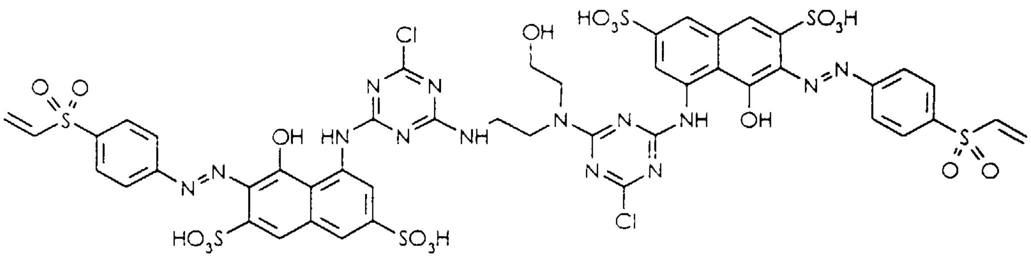

,

welche Baumwolle in einer roten Nuance mit guten Allgemeinechtheiten färbt.

Beispiel 7: Verfährt man wie im Beispiel 6 angegeben und verwendet anstelle von *N*-(2-Hydroxyethyl)-ethylendiamin eine äquivalente Menge 2-Hydroxy-1,3-diaminopropan, erhält man den Farbstoff der Formel

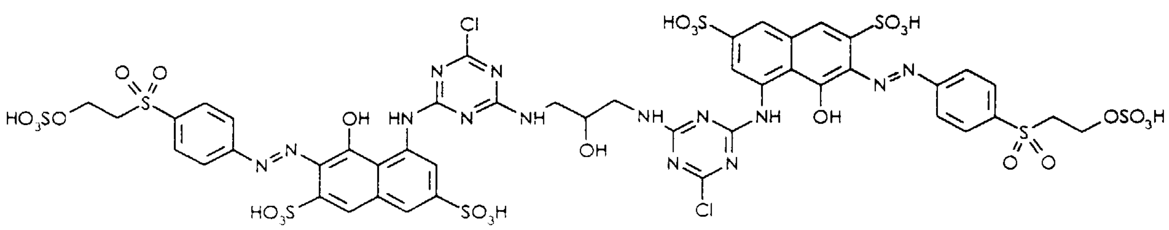

,

der Cellulose in einer roten Nuance mit guten Allgemeinechtheiten färbt.

Beispiel 8: Verfährt man wie im Beispiel 6 angegeben und verwendet anstelle von *N*-(2-Hydroxyethyl)-ethylendiamin eine äquivalente Menge *N*-(2-Hydroxyethyl)-propylendiamin, erhält man den Farbstoff der Formel

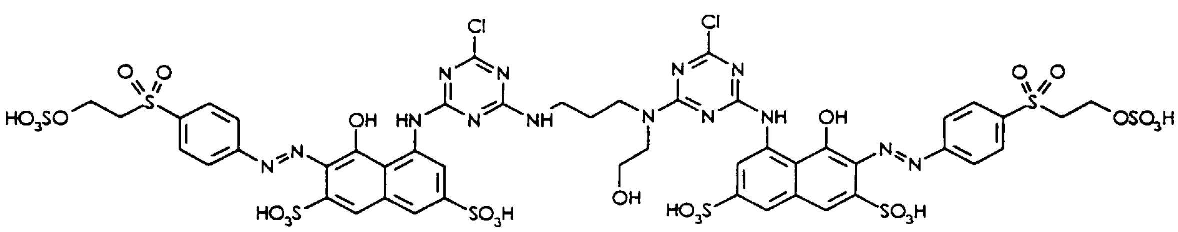

,

der Cellulose in einer roten Nuance mit guten Allgemeinechtheiten färbt.

Beispiel 9: Verfährt man wie im Beispiel 6 angegeben und verwendet anstelle von *N*-(2-Hydroxyethyl)-ethylendiamin eine äquivalente Menge 1,8-Diamino-3,6-dioxaoctan, erhält man den Farbstoff der Formel

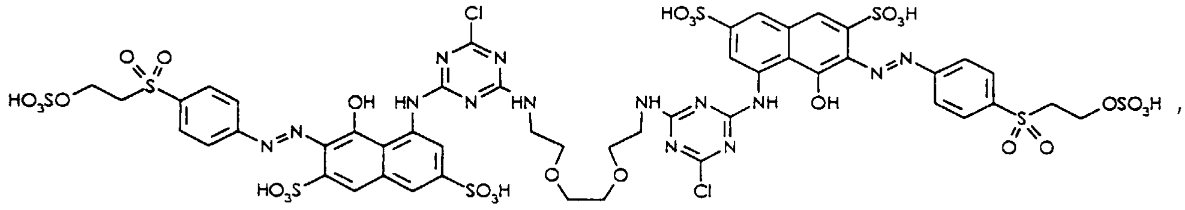

der Cellulose in einer roten Nuance mit guten Allgemeinechtheiten färbt.

Beispiel 10: Zur gemäss Beispiel 5 hergestellten die Verbindung der Formel (8) enthaltenden Reaktionsmischung werden 5 Teile *N*-Hydroxyethylethylendiamin in 50 Teilen Wasser so gegeben, dass der pH-Wert nicht über 8,5 steigt. Nach beendeter Zugabe erwärmt man auf eine Temperatur von 25 bis 30°C und hält den pH-Wert mit Natriumhydroxid-Lösung für zwei Stunden bei 8,5 und für 20 Minuten bei 11. Anschliessend wird mit verdünnter Salzsäure auf einen pH-Wert von 7 gestellt; eine anschliessende Umkehrosmose und das Eindampfen im Vakuum führen zur Verbindung der Formel

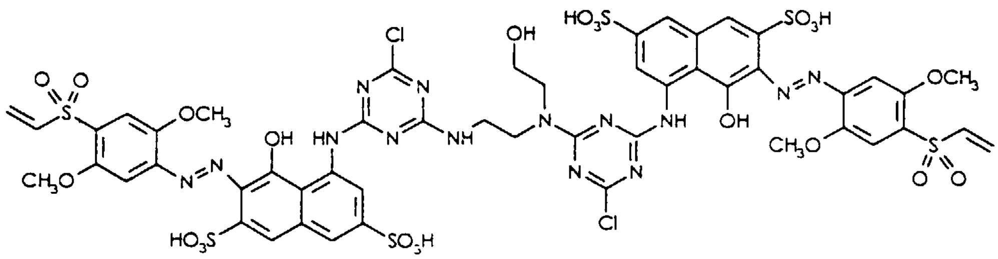

die Cellulose in einer roten Nuance mit guten Allgemeinechtheiten färbt.

Beispiele 11-16: Analog wie in den Beispielen 6 und 10 beschrieben lassen sich die folgenden Verbindungen herstellen, die Baumwolle jeweils mit guten Allgemeinechtheiten färben.

11

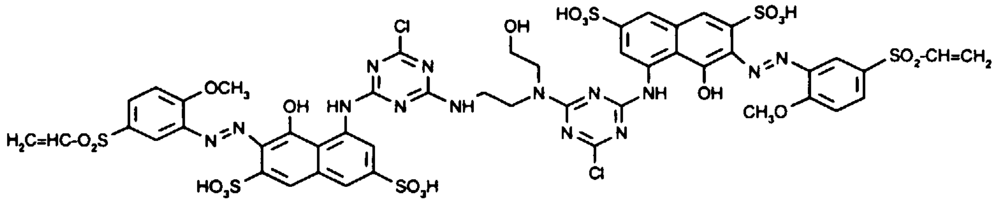

12

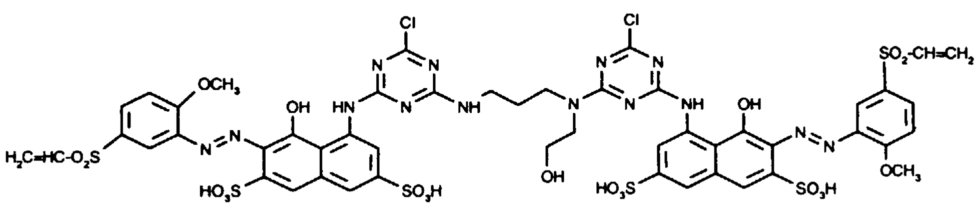

13

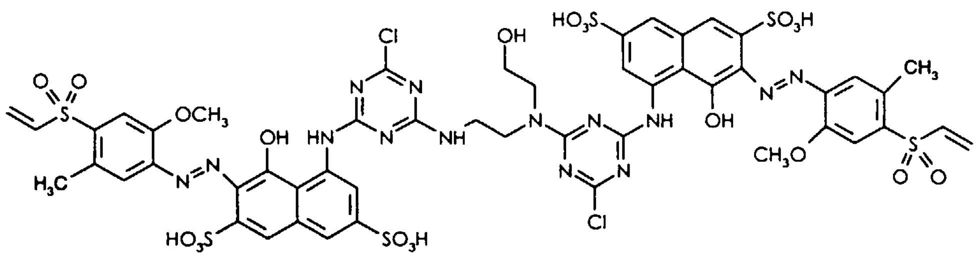

14

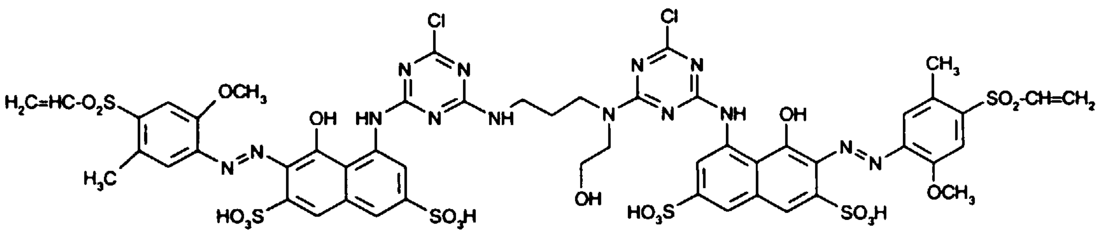

15

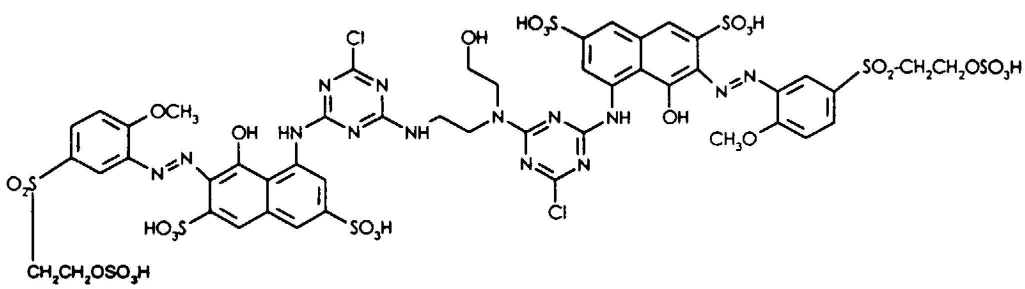

16

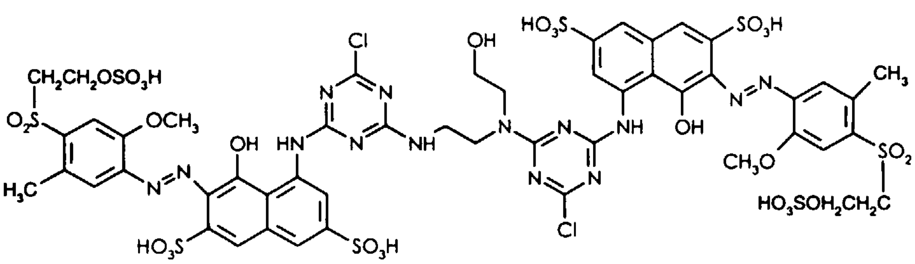

Beispiel 17: Zu der nach Beispiel 3 hergestellten Reaktionsmischung gibt man unter Eiskühlung eine neutralisierte Lösung von 42 Teilen *N*-(2-Hydroxyethyl)-ethylendiamin in 200 Teilen Wasser so zu, dass der pH-Wert 5,5 nicht übersteigt. Mit verdünnter, wässriger Natriumhydroxid-Lösung wird der pH-Wert bis zum Reaktionsende konstant bei 5,5 gehalten. Durch Zugabe von Kaliumchlorid wird das Kondensationsprodukt ausgefällt. Der Niederschlag, der als Hauptkomponente die Verbindung folgender Formel enthält

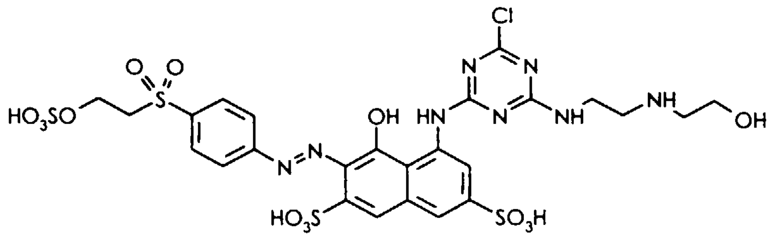

wird abfiltriert, mit gesättigter Kaliumchlorid-Lösung gewaschen und im Vakuum bei 40°C getrocknet.

Beispiel 18: Verfährt man wie in Beispiel 17 angegeben, verwendet jedoch anstelle von 42 Teilen *N*-(2-Hydroxyethyl)-ethylendiamin eine äquimolare Menge 2-Hydroxy-1,3-diaminopropan, so erhält man die Verbindung der Formel

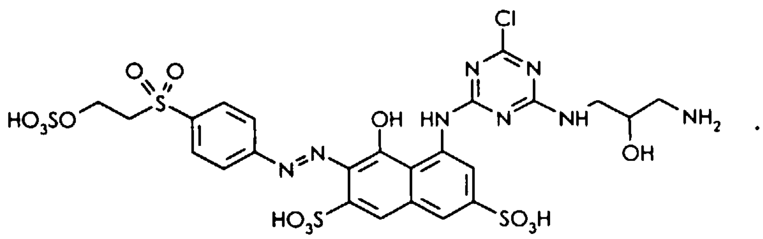

Beispiel 19: Verfährt man wie in Beispiel 17 angegeben, verwendet jedoch anstelle von 42 Teilen *N*-(2-Hydroxyethyl)-ethylendiamin eine äquimolare Menge *N*-(2-Hydroxyethyl)-propylendiamin, so erhält man die Verbindung der Formel

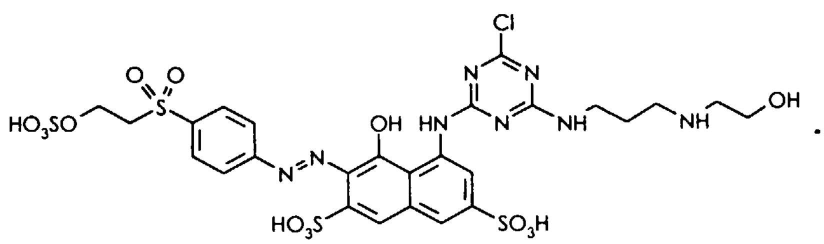

Beispiel 20: Eine Reaktionsmischung, hergestellt wie in Beispiel 5 beschrieben, wird mit 83 Teilen der Verbindung aus Beispiel 17 versetzt und bei Raumtemperatur und einem pH-Wert von 8,5 zum Farbstoff folgender Formel kondensiert,

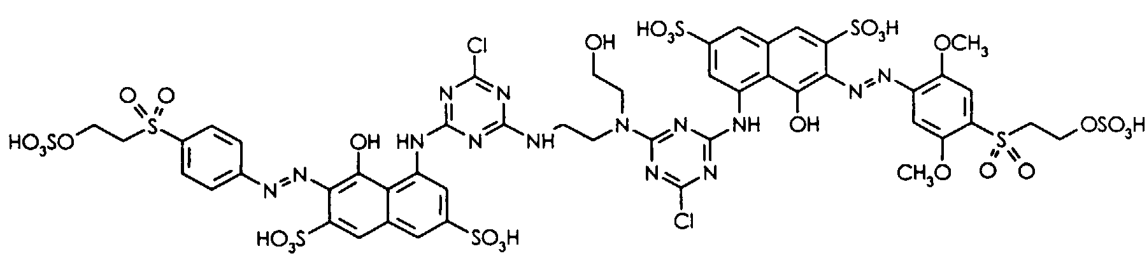

der nach Neutralisation, Umkehrosmose und Eindampfen im Vakuum als rotbraunes Pulver anfällt.

Beispiel 21 bis 26: Verwendet man 81 Teile der Verbindung aus Beispiel 18 und kondensiert mit der Reaktionsmischung aus Beispiel 5 in gleicher Weise wie in Beispiel 20 beschrieben, so erhält man den Farbstoff der Formel

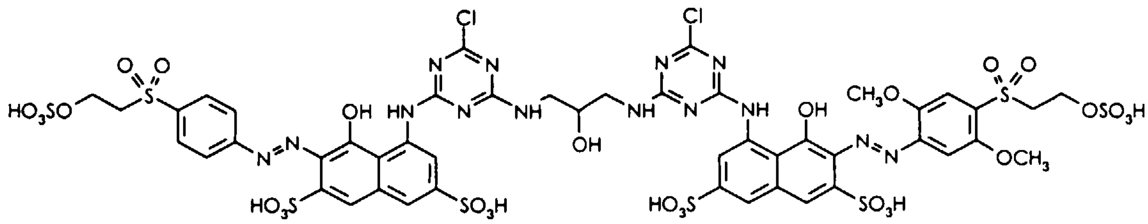

.

Verwendet man 84 Teile der Verbindung aus Beispiel 19 und kondensiert mit der Reaktionsmischung aus Beispiel 5 in gleicher Weise wie in Beispiel 20 beschrieben, so erhält man den Farbstoff der Formel

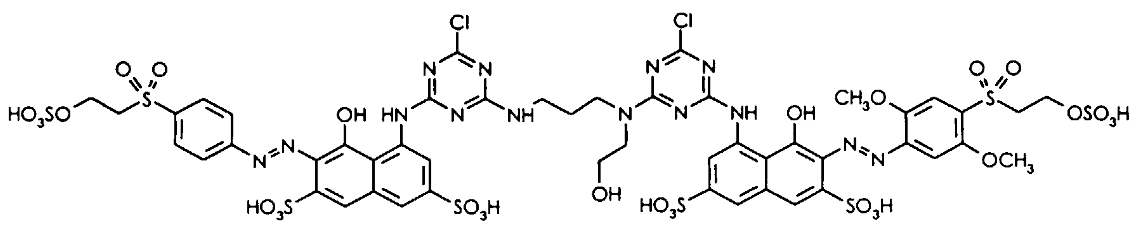

.

In analoger Weise können die Farbstoffe der Formeln

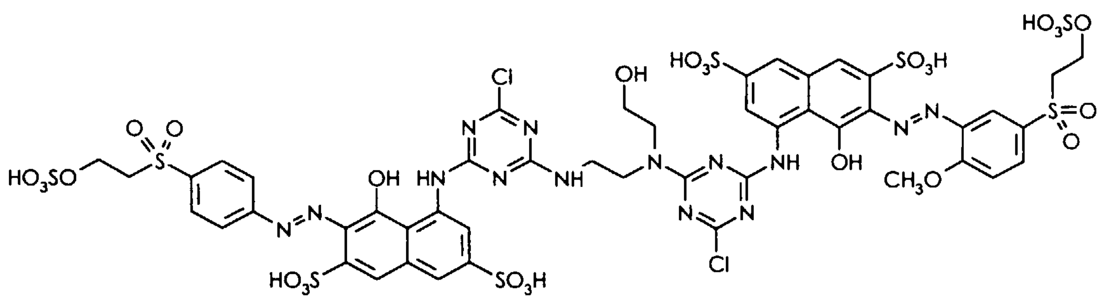

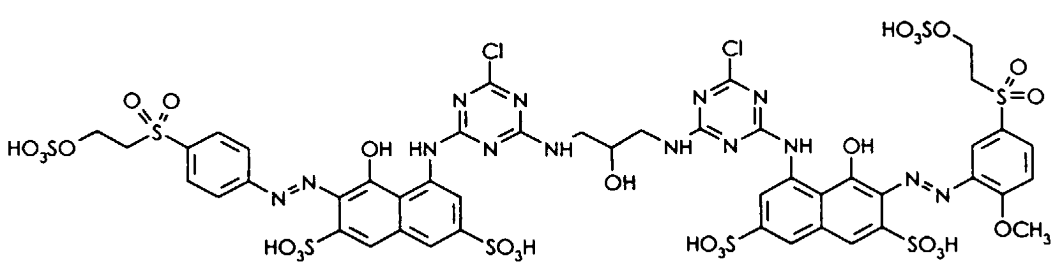

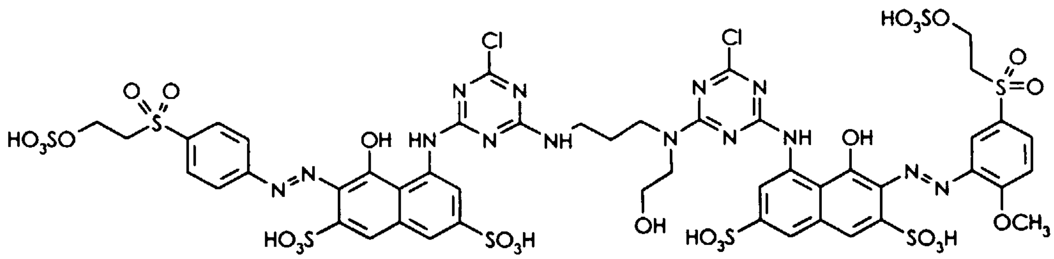

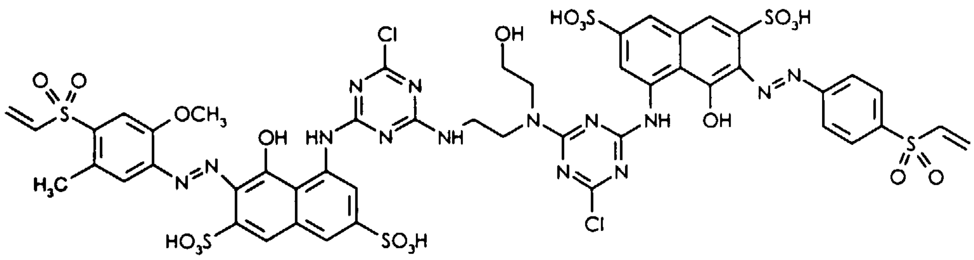

erhalten werden.

Beispiel 27: Man tropft 14 Teile Cyanurfluorid bei einer Temperatur von 0 bis 2°C zu einer neutralen Lösung von 50 Teilen 7-Amino-4-hydroxy-3-(4-methoxy-2-sulfophenylazo)-naphthalin-2-sulfosäure und 5 Teilen Dinatriumhydrogenphosphat in 500 Teilen Wasser. Der pH-Wert wird dabei durch Zugabe von wässriger Natriumhydroxid-Lösung konstant bei 5,5 gehalten. Nach beendeter Reaktion wird zu dieser Reaktionsmischung eine Suspension von 83 Teilen der in Beispiel 17 hergestellten Verbindung in 400 Teilen Wasser gegeben, der pH-Wert mit Natriumhydroxid-Lösung auf 8,5 angehoben und gehalten. Nach beendeter Kondensation wird die Temperatur auf 30°C erhöht, der pH-Wert auf 11 angehoben und 20 Minuten lang durch Zugabe von Natriumhydroxid-Lösung gehalten. Man neutralisiert, entsalzt die Reaktionsmischung durch Umkehrosmose weitgehend und engt im Vakuum ein. Man erhält den Farbstoff der Formel

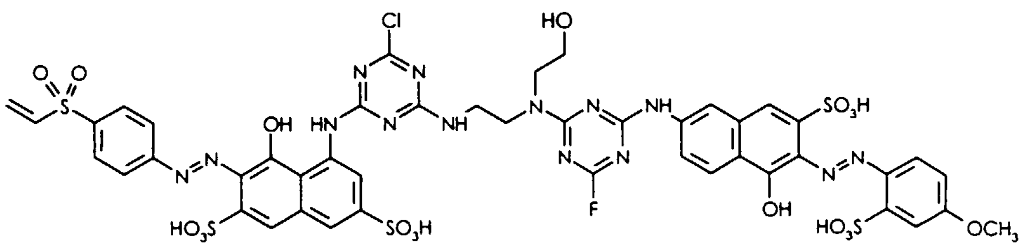 .

Färbevorschrift I 2 Teile des gemäss Beispiel 6 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II 2 Teile des gemäss Beispiel 10 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III 8 Teile des gemäss Beispiel 10 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV 4 Teile des gemäss Beispiel 6 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V 6 Teile des gemäss Beispiel 6 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI 2 Teile des gemäss Beispiel 10 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII 0,1 Teile Farbstoff gemäss Beispiel 6 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante Färbung erhalten, die sehr gute Licht-und Nassechtheiten aufweist.

Druckvorschrift I 3 Teile des gemäss Beispiel 6 erhaltenen Reaktivfarbstoffes werden unter schnellem Rühren in 100 Teile einer Stammverdickung, enthaltend 50 Teile 5%ige Natriumalginat verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II 5 Teile des gemäss Beispiel 6 erhaltenen Reaktivfarbstoffes werden unter schnellem Rühren in 100 Teile einer Stammverdickung, enthaltend 50 Teile 5%ige Natriumalginat verdickung, 36,5 Teile Wasser, 10 Teile Harnstoff, 1 Teil m-nitrobenzolsulfonNatrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

**1.** Verbindungen der Formel

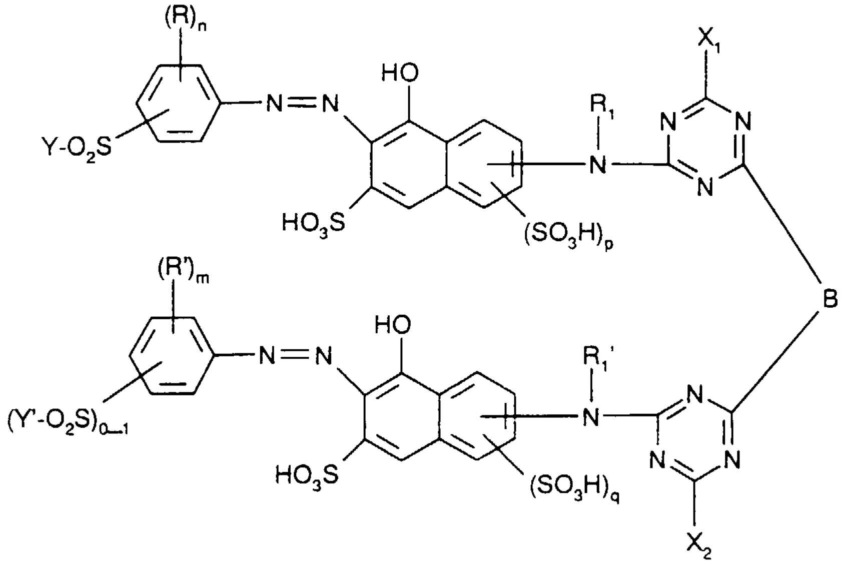

(1)

worin B ein Brückenglied der Formel

$$- NR_2 - (alk) - NR_3 - \qquad (2a)$$

oder

$$- NR_2 - (alk'\text{-}O)_r - (alk') - NR_2' - \qquad (2b)$$

oder

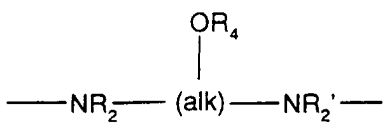

(2c)

$(R)_n$ für n gleiche oder verschiedene Reste aus der Gruppe $C_1$-$C_4$-Alkyl, $C_1$-$C_4$-Alkoxy, Halogen und Sulfo und $(R')_m$ für m gleiche oder verschiedene Reste aus der Gruppe $C_1$-$C_4$-Alkyl, $C_1$-$C_4$-Alkoxy, Halogen und Sulfo stehen,
n und m unabhängig voneinander je die Zahl 0, 1 oder 2 sind,
$R_1$, $R_1'$, $R_2$ und $R_2'$ unabhängig voneinander je Wasserstoff oder gegebenenfalls substituiertes $C_1$-$C_4$-Alkyl bedeuten,
$R_3$ durch Hydroxy substituiertes $C_1$-$C_6$-Alkyl ist,
$R_4$ Wasserstoff oder $C_1$-$C_4$-Alkyl bedeutet,
(alk) geradkettiges oder verzweigtes $C_2$-$C_{12}$-Alkylen und (alk') geradkettiges oder verzweigtes $C_2$-$C_4$-Alkylen sind,
$X_1$ und $X_2$ unabhängig voneinander je für Halogen, 3-Carboxypyridin-1-yl oder 3-Carbamoylpyridin-1-yl stehen,
Y und Y' unabhängig voneinander je Vinyl oder einen Rest $-CH_2$-$CH_2$-U bedeuten und U eine Abgangsgruppe ist,
und p und q unabhängig voneinander je die Zahl 0 oder 1 und r die Zahl 1, 2 oder 3 bedeuten.

**2.** Verbindungen gemäss Anspruch 1, dadurch gekennzeichnet, dass $(R)_n$ und $(R')_m$ unabhängig voneinander je für 0, 1 oder 2 gleiche oder verschiedene Reste aus der Gruppe Methyl, Methoxy und Sulfo stehen.

**3.** Verbindungen gemäss Anspruch 1 oder 2, dadurch gekennzeichnet, dass $X_1$ und $X_2$ gleich sind und je Chlor oder Fluor, vorzugsweise Chlor, bedeuten.

**4.** Verbindungen gemäss einem der Ansprüche 1 bis 3, dadurch gekennzeichnet, dass $R_1$ und $R_1'$ gleich sind und je Wasserstoff oder $C_1$-$C_4$-Alkyl bedeuten.

**5.** Verbindungen gemäss einem der Ansprüche 1 bis 4, dadurch gekennzeichnet, dass p und q je die Zahl 1 bedeuten.

**6.** Verbindungen gemäss einem der Ansprüche 1 bis 5, dadurch gekennzeichnet, dass $X_1$ und $X_2$ gleich sind und je Chlor bedeuten, $R_1$ und $R_1'$ gleich sind und je Wasserstoff, Methyl oder Ethyl sind, $(R)_n$ und $(R')_m$ gleich sind und je für 0, 1 oder 2 gleiche oder verschiedene Reste aus der Gruppe Methyl, Methoxy und Sulfo stehen, Y und Y' gleich sind und je Vinyl oder β-Sulfatoethyl bedeuten und p und q je für die Zahl 1 stehen.

**7.** Verbindungen gemäss einem der Ansprüche 1 bis 6, dadurch gekennzeichnet, dass B einen Rest der zuvor angegebenen Formeln (2a), (2b) oder (2c) bedeutet, worin (alk) geradkettiges oder verzweigtes $C_2$-$C_6$-Alkylen, (alk') 1,2-Ethylen, r die Zahl 2 oder 3, $R_2$ und $R_2'$ je Wasserstoff, $R_3$ monohydroxy-substituiertes $C_1$-$C_4$-Alkyl und $R_4$ Wasserstoff bedeuten.

**8.** Verbindungen gemäss einem der Ansprüche 1 bis 7, dadurch gekennzeichnet, dass B für einen Rest der Formel (2a) steht.

**9.** Verbindungen gemäss einem der Ansprüche 1 bis 8, dadurch gekennzeichnet, dass B für einen Rest der im Anspruch 1 angegebenen Formel (2a) steht, worin $R_2$ Wasserstoff, (alk) geradkettiges oder verzweigtes $C_2$-$C_4$-Alkylen und $R_3$ monohydroxy-substituiertes $C_1$-$C_4$-Alkyl bedeuten.

**10.** Verbindungen gemäss Anspruch 1 der Formel

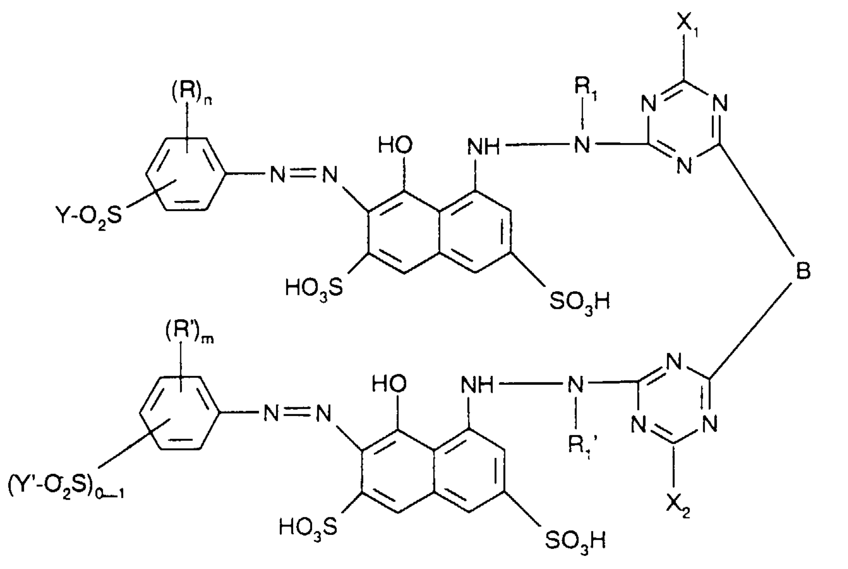

(1a),

worin $X_1$ und $X_2$ gleich sind und je Chlor bedeuten, $R_1$ und $R_1'$ je Wasserstoff sind, $(R)_n$ und $(R')_m$ gleich sind und je für 0, 1 oder 2 gleiche oder verschiedene Reste aus der Gruppe Methyl, Methoxy und Sulfo stehen, Y und Y' gleich sind und je Vinyl oder β-Sulfatoethyl bedeuten und B ein Rest der Formel

$$- NR_2 - (alk) - NR_3 - \qquad (2a)$$

ist, worin $R_2$ Wasserstoff, (alk) geradkettiges oder verzweigtes $C_2$-$C_4$-Alkylen und $R_3$ monohydroxy-substituiertes $C_1$-$C_4$-Alkyl bedeuten.

**11.** Verbindungen gemäss Anspruch 10, worin B der Rest $-NH-CH_2-CH_2-N(CH_2CH_2OH)-$ ist.

**12.** Verfahren zur Herstellung von Verbindungen der Formel (1) gemäss Anspruch 1, dadurch gekennzeichnet, dass man je in etwa 1 Moläquivalent einer Verbindung der Formel

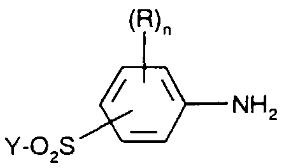 (3a),

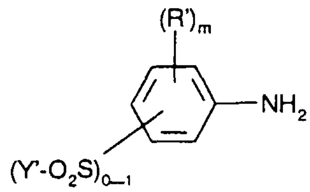 (3b),

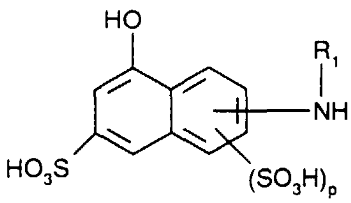 (4a),

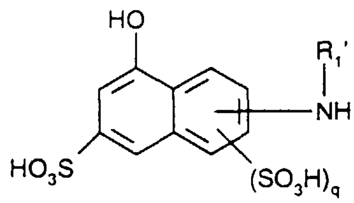 (4b)

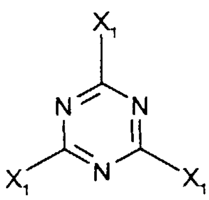 (5a),

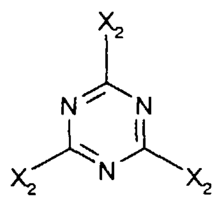 (5b)

und

$$H\text{-}B\text{-}H \qquad (6),$$

in beliebiger Reihenfolge miteinander umsetzt, wobei B, $(R)_n$, $(R')_m$ $R_1$, $R_1'$, $X_1$, $X_2$, Y , p und q jeweils die zuvor angegebene Bedeutung haben.

**13.** Verwendung von Verbindungen der Formel (1) gemäss einem der Ansprüche 1 bis 11 zum Färben oder Bedrucken von hydroxylgruppenhaltigen oder stickstoffhaltigen Fasermaterialien.

**14.** Verwendung gemäss Anspruch 13, dadurch gekennzeichnet, dass man cellulosehaltige Fasermaterialien, insbesondere baumwollhaltige Fasermaterialien, färbt oder bedruckt.

## Claims

**1.** A compound of the formula

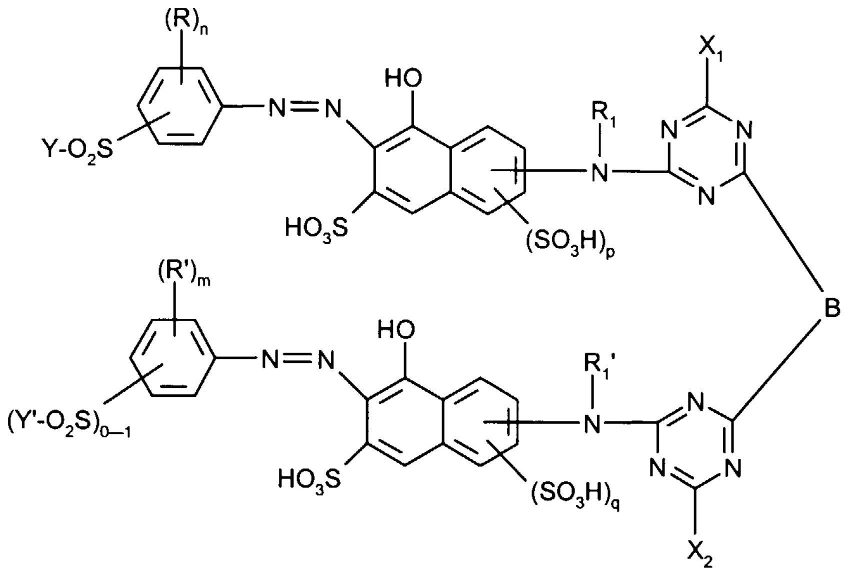

(1)

in which B is a bridge member of the formula

$$- NR_2 - (alk) - NR_3 - \qquad (2a)$$

or

$$- NR_2 - (alk' -O)_r - (alk') - NR_2' - \qquad (2b)$$

or

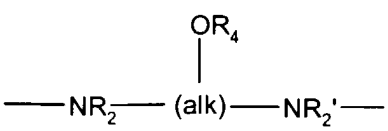

(2c),

$(R)_n$ is n identical or different radicals from the group consisting of $C_1$-$C_4$ alkyl, $C_1$-$C_4$alkoxy, halogen and sulfo and $(R')_m$ is m identical or different radicals from the group consisting of $C_1$-$C_4$alkyl, $C_1$-$C_4$alkoxy, halogen and sulfo,
n and m independently of one another are each the number 0, 1 or 2,
$R_1$, $R_1'$, $R_2$ and $R_2'$ independently of one another are each hydrogen or substituted or unsubstituted $C_1$-$C_4$alkyl,
$R_3$ is $C_1$-$C_6$alkyl which is substituted by hydroxyl,
$R_4$ is hydrogen or $C_1$-$C_4$alkyl,
(alk) is straight-chain or branched $C_2$-$C_{12}$alkylene and (alk') is straight-chain or branched $C_2$-$C_4$alkylene,
$X_1$ and $X_2$ independently of one another are each halogen, 3-carboxypyridin-1-yl or 3-carbamoylpyridin-1-yl,
Y and Y' independently of one another are each vinyl or a radical $-CH_2$-$CH_2$-U and U is a leaving group,
and p and q independently of one another are each the number 0 or 1 and r is the number 1, 2 or 3.

**2.** A compound according to claim 1, in which $(R)_n$ and $(R')_m$ independently of one another are each 0, 1 or 2 identical or different radicals from the group consisting of methyl, methoxy and sulfo.

**3.** A compound according to claim 1 or 2, in which $X_1$ and $X_2$ are identical and are each chlorine or fluorine, preferably chlorine.

**4.** A compound according to any one of claims 1 to 3, in which $R_1$ and $R_1'$ are identical and are each hydrogen or $C_1$-$C_4$alkyl.

**5.** A compound according to any one of claims 1 to 4, in which p and q are each the number 1.

**6.** A compound according to any one of claims 1 to 5, in which $X_1$ and $X_2$ are identical and are each chlorine, $R_1$ and $R_1'$ are identical and are each hydrogen, methyl or ethyl, $(R)_n$ and $(R')_m$ are identical and are each 0, 1 or 2 identical or different radicals from the group consisting of methyl, methoxy and sulfo, Y and Y' are identical and are each vinyl or β-sulfatoethyl and p and q are each the number 1.

**7.** A compound according to any one of claims 1 to 6, in which B is a radical of the formulae (2a), (2b) or (2c) defined above, in which (alk) is straight-chain or branched $C_2$-$C_6$alkylene, (alk') is 1,2-ethylene, r is the number 2 or 3, $R_2$ and $R_2'$ are each hydrogen, $R_3$ is monohydroxy-substituted $C_1$-$C_4$alkyl and $R_4$ is hydrogen.

**8.** A compound according to any one of claims 1 to 7, in which B is a radical of the formula (2a).

**9.** A compound according to any one of claims 1 to 8, in which B is a radical of the formula (2a) defined in claim 1, in which $R_2$ is hydrogen, (alk) is straight-chain or branched $C_2$-$C_4$alkylene and $R_3$ is monohydroxy-substituted $C_1$-$C_4$alkyl.

**10.** A compound according to claim 1, of the formula

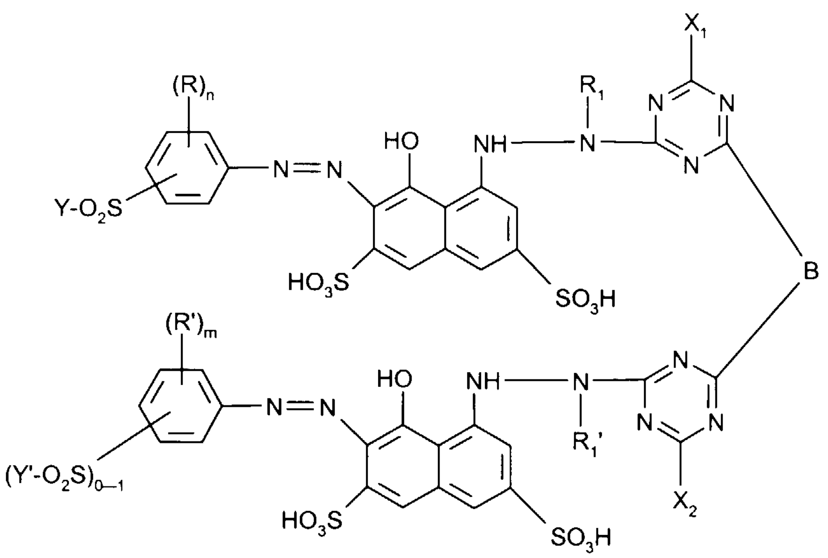

(1a),

in which $X_1$ and $X_2$ are identical and are each chlorine, $R_1$ and $R_1'$ are each hydrogen, $(R)_n$ and $(R')_m$ are identical and are each 0, 1 or 2 identical or different radicals from the group consisting of methyl, methoxy and sulfo, Y and Y' are identical and are each vinyl or β-sulfatoethyl and B is a radical of the formula

$$-NR_2-(alk)-NR_3- \quad (2a)$$

in which $R_2$ is hydrogen, (alk) is straight-chain or branched $C_2$-$C_4$alkylene and $R_3$ is monohydroxy-substituted $C_1$-$C_4$alkyl.

**11.** A compound according to claim 10, in which B is the radical $-NH-CH_2N(CH_2-CH_2OH)-$.

**12.** A process for the preparation of a compound of the formula (1) according to claim 1, which comprises reacting in each case about 1 molar equivalent of a compound of the formula

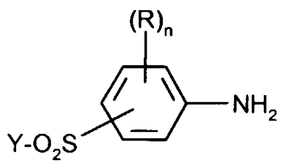 (3a),

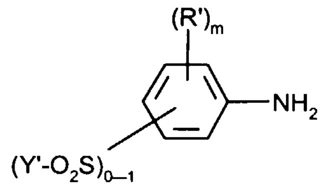 (3b),

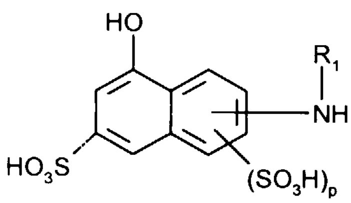 (4a),

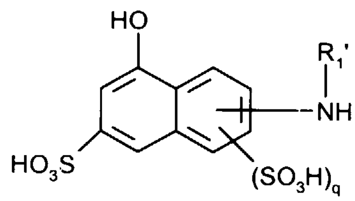 (4b)

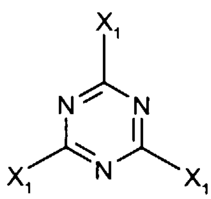 (5a),

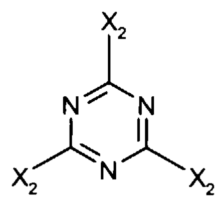 (5b)

and

$$H - B - H \quad (6),$$

in which B, $(R)_n$, $(R')_m$, $R_1$, $R_1'$, $X_1$, $X_2$, Y , p and q are each as defined above, with one another in any sequence.

**13.** The use of a compound of the formula (1) according to any one of claims 1 to 11 for dyeing or printing fibre materials containing hydroxyl groups or containing nitrogen.

**14.** The use according to claim 13, wherein cellulosic fibre materials, in particular fibre materials containing cotton, are dyed or printed.

**Revendications**

**1.** Composés de formule

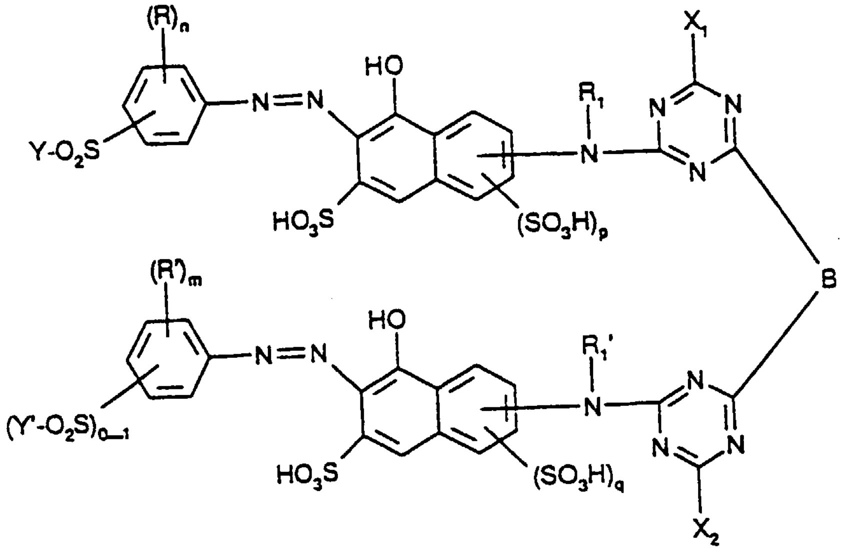

(1)

où

B représente un élément de pont de formule

$$-NR_2\text{-(alk)-}NR_3\text{-} \quad (2a)$$

ou

$$-NR_2\text{-(alk'-O)}_r\text{-(alk')-}NR_2\text{'-} \quad (2b)$$

ou

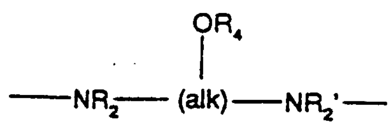

(2c)

$(R)_n$ représente n restes identiques ou différents pris dans le groupe des restes alkyle en $C_1$-$C_4$, alkoxy en $C_1$-$C_4$, halogène et sulfo et

$(R')_m$ représente m restes identiques ou différents pris dans le groupe des restes comportant alkyle en $C_1$-$C_4$, alkoxy en $C_1$-$C_4$, halogène et sulfo,

n et m chacun vaut, indépendamment l'un de l'autre, 0, 1 ou 2,

$R_1$, $R_1'$, $R_2$ et $R_2'$ chacun représente, indépendamment l'un de l'autre, des atomes d'hydrogène ou des groupes alkyle en $C_1$-$C_4$ éventuellement substitué,

$R_3$ représente un groupe alkyle en $C_1$-$C_6$ substitué par un groupe hydroxy,

$R_4$ représente un atome d'hydrogène ou un groupe alkyle en $C_1$-$C_4$,

(alk) représente un groupe alkylène en $C_2$-$C_{12}$ à chaîne droite ou ramifiée et

(alk') représente un groupe alkylène en $C_2$-$C_4$ à chaîne droite ou ramifiée,

$X_1$ et $X_2$ chacun représente, indépendamment l'un de l'autre, des atomes d'halogènes, des groupes 3-carboxypyridin-1-yle ou 3-carbamoylpyridin-1-yle,

Y et Y' chacun représente, indépendamment l'un de l'autre, un groupe vinyle ou un reste de formule $-CH_2\text{-}CH_2\text{-}U$ et U est un groupe partant, et

p et q chacun vaut, indépendamment l'un de l'autre, 0 ou 1 et r vaut 1, 2 ou.

**2.** Composés selon la revendication 1, caractérisés en ce que $(R)_n$ et $(R')_m$ chacun représente, indépendamment l'un de l'autre, 0, 1 ou 2 restes identiques ou différents pris dans le groupes des restes méthyle, méthoxy et sulfo.

**3.** Composés selon la revendication 1 ou 2, caractérisés en ce que $X_1$ et $X_2$ sont identiques et chacun représente un atome de chlore ou de fluor, de préférence de chlore.

**4.** Composés selon l'une des revendications 1 à 3, caractérisés en ce que $R_1$ et $R_1'$, sont identiques et chacun représente un atome d'hydrogène ou un groupe alkyle en $C_1$-$C_4$.

**5.** Composés selon l'une des revendications 1 à 4, caractérisés en ce que p et q chacun vaut 1.

**6.** Composés selon l'une des revendications 1 à 5, caractérisés en ce que $X_1$ et $X_2$ sont identiques et chacun représente un atome de chlore, $R_1$ et $R_1'$ sont identiques et chacun représente un atome d'hydrogène, un groupe méthyle ou éthyle, $(R)_n$ et $(R')_m$ sont identiques et chacun représente 0, 1 ou 2 restes identiques ou différents pris dans le groupe des restes méthyle, méthoxy et sulfo, Y et Y' sont identiques et chacun représente un groupe vinyle ou β-sulfatoéthyle et p et q chacun vaut 1.

**7.** Composés selon l'une des revendications 1 à 6, caractérisés en ce que B représente un reste de formules (2a), (2b) ou (2c) citées auparavant, où (alk) représente un groupe alkylène en $C_2$-$C_6$ à chaîne droite ou ramifiée, (alk') représente 1,2-éthylène, r vaut 2 ou 3, $R_2$ et $R'_2$ chacun représente un atome d'hydrogène, $R_3$ représente un groupe alkyle en $C_1$-$C_4$ monohydroxysubstitué et $R_4$ représente un atome d'hydrogène.

**8.** Composés selon l'une des revendications 1 à 7, caractérisés en ce que B représente un reste de formule (2a).

**9.** Composés selon l'une des revendications 1 à 8, caractérisés en ce que B représente un reste de formule (2a) donnée à la revendication 1, où $R_2$ représente un atome d'hydrogène, (alk) représente un groupe alkylène en $C_2$-$C_4$ à chaîne droite ou ramifiée et $R_3$ représente un groupe alkyle en $C_1$-$C_4$ monohydroxysubstitué.

**10.** Composés selon la revendication 1 de formule

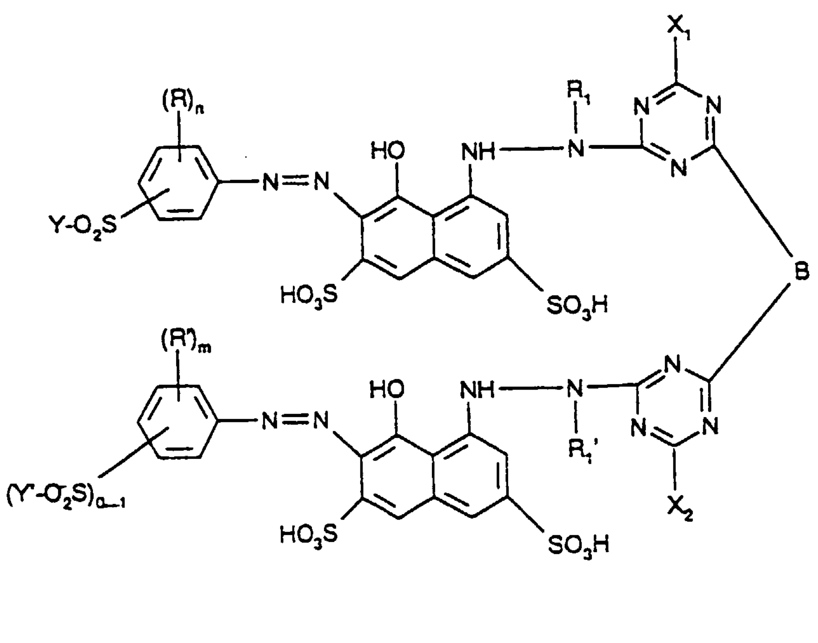

(1a),

où

| | |
|---|---|
| $X_1$ et $X_2$ | sont identiques et chacun représente un atome de chlore, |
| $R_1$ et $R_{1'}$ | chacun représente un atome d'hydrogène, |
| $(R)_n$ et $(R')_m$ | sont identiques et chacun représente 0, 1 ou 2 restes identiques ou différents pris dans le groupe des restes méthyle, méthoxy et sulfo, |
| Y et Y' | sont identiques et chacun représente un groupe vinyle ou β-sulfatoéthyle et |
| B | représente un reste de formule |

$$-NR_2\text{-(alk)-}NR_3- \qquad (2a)$$

où

- $R_2$ représente un atome d'hydrogène,
- (alk) représente un groupe alkyle en $C_2$-$C_4$ à chaîne droite ou ramifiée, et
- $R_3$ représente un groupe alkyle en $C_1$-$C_4$ monohydroxysubstitué.

**11.** Composés selon la revendication 10, où B représente le reste $-NH-CH_2-CH_2-N(CH_2CH_2OH)-$.

**12.** Procédé de préparation de composés de formule (1) selon la revendication 1, caractérisé en ce que'on fait réagir à chaque fois environ 1 équivalent en moles d'un composé de formule

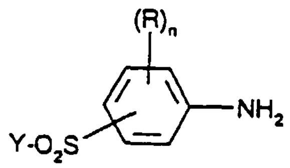

(3a),

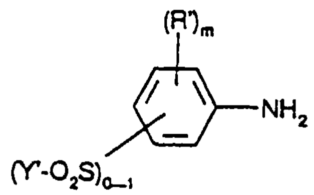

(3b),

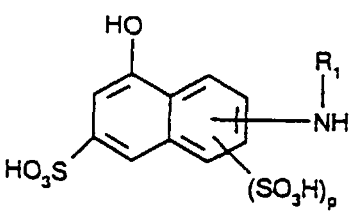

(4a),

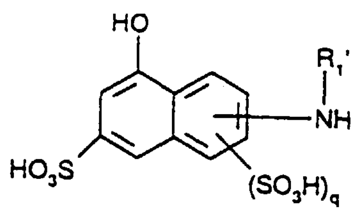

(4b)

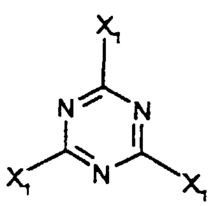

(5a),

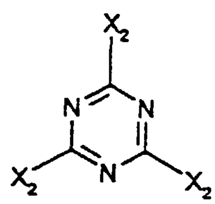

(5b)

et

$$H\text{-}B\text{-}H \qquad (6)$$

dans une succession arbitraire, B, $(R)_n$, $(R')_m$, $R_1$, $R_1'$, $X_1$, $X_2$, Y, p et q, chacun possède la signification donnée ci-dessus.

**13.** Utilisation de composés de formule (1) selon l'une des revendications 1 à 11, pour la teinture ou l'impression de matières fibreuses présentant des groupes hydroxyle ou des atomes d'azote.

**14.** Utilisation selon la revendication 13, caractérisée en ce qu'on teint ou on imprime des matières fibreuses cellulosiques, en particulier les matières fibreuses contenant du coton.